(19)

Europäisches Patentamt

European Patent Office

Office européen des brevets

(11) **EP 4 708 414 A1**

(12) **EUROPEAN PATENT APPLICATION**

(43) Date of publication:
**11.03.2026 Bulletin 2026/11**

(21) Application number: **25198381.3**

(22) Date of filing: **27.08.2025**

(51) International Patent Classification (IPC):
*H01M 8/103* [(2016.01)]  *H01M 8/1027* [(2016.01)]
*H01M 8/1069* [(2016.01)]  *H01M 8/1086* [(2016.01)]
*C25B 1/04* [(2021.01)]  *C25B 13/08* [(2006.01)]

(52) Cooperative Patent Classification (CPC):
**H01M 8/103; C08J 5/2218; C08J 5/2256;
C25B 1/04; C25B 13/08; H01M 8/1027;
H01M 8/1069; H01M 8/1086**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **10.09.2024 KR 20240123152**

(71) Applicant: **Korea Institute of Science and
Technology
Seoul 02792 (KR)**

(72) Inventors:
• **HENKENSMEIER, Dirk
02792 Seoul (KR)**

• **IKHSAN, Muhammad Mara
02792 Seoul (KR)**
• **HA, Heung Yong
02792 Seoul (KR)**
• **ABBAS, Saleem
02792 Seoul (KR)**
• **BUI, Trung Tuyen
02792 Seoul (KR)**
• **Dayan, Asridin
02792 Seoul (KR)**

(74) Representative: **advotec.
Patent- und Rechtsanwaltspartnerschaft mbB
Widenmayerstraße 4
80538 München (DE)**

(54) **POLYMER ELECTROLYTE MEMBRANE AND METHOD OF PREPARING THE SAME**

(57)    The present specification relates to a polymer electrolyte membrane and a method of preparing the same. The polymer electrolyte membrane according to one embodiment of the present invention may be mass-produced since crosslinking is not required, and exhibits significantly superior performance compared to commercially available AEM membranes.

**FIG. 1**

**EP 4 708 414 A1**

**Description**

CROSS REFERENCE TO RELATED APPLICATION

The present application claims priority to Korean Patent Application No. 10-2024-0123152, filed September 10, 2024, the entire contents of which are hereby incorporated by this reference.

BACKGROUND OF THE INVENTION

Field of the Invention

In the present specification, a polymer electrolyte membrane and a method of preparing the same are disclosed.

[Description of Government-Sponsored Research]

This research was conducted with the support from the Ministry of Science and ICT of the Republic of Korea under the supervision of the National Research Foundation of Korea. The name of the research business is the Korea Institute of Science and Technology (KIST) Research Operational Expenses Support (major project expense), and the name of the research project is Development of Integrated Green Hydrogen Production and Liquid Storage Technology (Unique Project identification number: 2710034008).

This research was conducted with the support from the Ministry of Trade, Industry and Energy of the Republic of Korea under the supervision of the Korea Institute for Advancement of Technology. The name of the research business is the International Cooperation in Industrial Technology, and the name of the research project is Denmark-South Korea Joint Research for the Development of Redox Flow Batteries (Unique Project identification number: 1415183511).

This research was conducted with the support from the Ministry of Trade, Industry and Energy of the Republic of Korea under the supervision of the Korea Institute for Advancement of Technology. The name of the research business is the International Cooperation in Industrial Technology, and the name of the research project is Development of low-cost active materials, electrolytes, and low-cost separators based on low-cost metals, and development of a 200W redox flow battery utilizing these technologies (Unique Project identification number: 1415189849).

Description of the Related Art

A polymer electrolyte membrane is widely used as an ion exchange membrane such as for electrolysis of water (water electrolysis) or fuel cells. A water electrolysis device is a device that produces hydrogen and oxygen by electrochemically decomposing water, and is attracting attention as a hydrogen production technology with high energy efficiency. Conversely, a fuel cell is an eco-friendly power generation system that produces electricity by electrochemically reacting hydrogen and oxygen, and is regarded as one of the new energy technology due to its simpler energy conversion steps and higher efficiency compared to internal combustion engines.

In particular, green hydrogen production through water electrolysis is an essential component of a carbon-free energy scenario in the future. An anion exchange membrane (AEM) water electrolyzer may combine the advantages of conventional state-of-the-art alkaline water electrolysis (e.g., inexpensive metal catalysts based on Ni, Fe, etc., > 10 years of operation) and PEM water electrolysis (thin and high-density membrane capable of reducing resistance and enabling use of high differential pressure).

However, despite such advantages of AEM water electrolysis, there is a disadvantage in that alkaline stability of an anion exchange membrane (AEM) used as a separator in AEM water electrolysis is low. In general, an AEM is made of a polymer including a cationic group, typically a quaternary ammonium group or an imidazolium group, and such groups react with hydroxide ions in nucleophilic substitution or Hofmann elimination, thereby shortening the lifetime of the AEM.

Therefore, in order to replace the current AEM, a membrane that exhibits high conductivity in 0.2 M to 1 M KOH but has no known decomposition point (i.e., no ammonium group or imidazolium group) will strongly promote the production of inexpensive green hydrogen by extending the lifetime of AEM water electrolyzers.

In addition, according to Korean Laid-Open Patent Publication No. 10-2024-0009684, in order to use sulfonated para-PBI, the membrane needs to be crosslinked using a crosslinking agent such as dibromoxylene (DBX). Since DBX is added to a casting solution and reacts slowly with the polymer even at room temperature, it complicates the membrane casting process and greatly limits the storage life of the casting solution. The imidazole unit crosslinked by DBX is expected to become a limit point of alkaline decomposition.

In addition, sulfonated para-PBI has been found to leach unknown yellow-colored components into a KOH solution. Although the membrane itself remains stable, this yellow is an undesirable color and may damage the catalyst layer.

Therefore, a new technology for replacing such an AEM is needed.

SUMMARY OF THE INVENTION

An object according to one aspect of the present invention is to provide a polymer electrolyte membrane having a long lifetime and capable of mass-producing green hydrogen at low cost, and a method of preparing the same.

In one aspect of the present invention, a polymer electrolyte membrane is provided, which includes partially sulfonated poly[2,2'-(4,4'-oxybis(1,4-phenylene))-5,5'-bibenzimidazole] (O-PBI) or a derivative thereof, and the poly [2,2'-(4,4'-oxybis(1,4-phenylene))-5,5'-bibenzimidazole] (O-PBI) or the derivative thereof is non-crosslinked.

In another aspect, the present invention provides a water electrolysis device including the polymer electrolyte membrane.

In another aspect, the present invention provides a method of preparing the above-described polymer electrolyte membrane, the method including: synthesizing poly[2,2'-(4,4'-oxybis(1,4-phenylene))-5,5'-bibenzimidazole] (O-PBI) or a derivative thereof; partially sulfonating the poly[2,2'-(4,4'-oxybis(1,4-phenylene))-5,5'-bibenzimidazole] (O-PBI) or the derivative thereof; preparing a casting solution including the partially sulfonated poly[2,2'-(4,4'-oxybis(1,4-phenylene))-5,5'-bibenzimidazole] (O-PBI) or the derivative thereof; and preparing a membrane by coating the casting solution.

A water electrolysis device including the polymer electrolyte membrane according to one embodiment of the present invention exhibits unprecedented high conductivity, and, unlike sulfonated para-PBI, does not require crosslinking, thereby exhibiting the effect of providing a long lifetime.

BRIEF DESCRIPTION OF THE DRAWINGS

FIG. 1 is a graph illustrating conductivity (mS/cm) according to the concentration of a KOH solution of a polymer electrolyte membrane according to one embodiment of the present invention.

FIGS. 2A to 2C are graphs illustrating (FIG. 2A) length swelling, (FIG. 2B) thickness swelling, and (FIG. 2C) volume swelling according to the concentration of a KOH solution of a polymer electrolyte membrane according to one embodiment of the present invention.

FIG. 3 is a graph evaluating conductivity according to pre-swelling concentration of a polymer electrolyte membrane according to one embodiment of the present invention.

FIG. 4 is a graph evaluating conductivity according to operating temperature of a polymer electrolyte membrane according to one embodiment of the present invention.

FIG. 5 is a result of evaluating conductivity of a polymer electrolyte membrane according to one embodiment of the present invention and of commercially available membranes under conditions of room temperature and 1 M KOH.

FIG. 6 is a photograph of a polymer electrolyte membrane according to one embodiment of the present invention, stored in a zipper bag.

DETAILED DESCRIPTION OF THE INVENTION

Hereinafter, exemplary embodiments of the present invention will be described in detail with reference to the accompanying drawings.

The embodiments of the present invention disclosed herein are illustrated for purposes of description only, and the embodiments of the present invention may be practiced in various forms and should not be interpreted as limiting to the embodiments described herein.

The present invention is subject to various modifications and may have various forms, and the embodiments are not intended to limit the present invention to any particular disclosure form, but are to be understood to include all modifications, equivalents, or substitutions that fall within the scope of the teachings and art of the present invention.

In the present specification, unless explicitly described to the contrary, the word "comprise" or "include" and variations, such as "comprises", "comprising", "includes" or "including", will be understood to imply the further inclusion of any other constituent elements, not the exclusion of any other constituent elements.

**Polymer Electrolyte Membrane**

In exemplary embodiments of the present invention, a polymer electrolyte membrane is provided, which includes partially sulfonated poly[2,2'-(4,4'-oxybis(1,4-phenylene))-5,5'-bibenzimidazole] (O-PBI) or a derivative thereof, and the poly[2,2'-(4,4'-oxybis(1,4-phenylene))-5,5'-bibenzimidazole] (O-PBI) or the derivative thereof is non-crosslinked, and the partially sulfonated poly[2,2'-(4,4'-oxybis(1,4-phenylene))-5,5'-bibenzimidazole] (O-PBI) or the derivative thereof is doped with potassium hydroxide (KOH).

The term "derivative" used in the present invention refers to a compound obtained by chemically modifying a part of a compound with a compound as a parent compound through introduction of a functional group, oxidation, reduction, substitution of atoms, or the like, and is a similar compound modified to the extent that the structure and properties of the parent compound are not significantly changed. Usually, it refers to a compound in which a hydrogen atom or a specific atomic group in a compound is substituted by another atom or atomic group.

Accordingly, the "partially sulfonated poly[2,2'-(4,4'-oxybis(1,4-phenylene))-5,5'-bibenzimidazole] (O-PBI) or a derivative thereof" of the present invention refers to a compound that, like the partially sulfonated poly[2,2'-(4,4'-oxybis(1,4-phenylene))-5,5'-bibenzimidazole] (O-PBI) or a derivative thereof (hereinafter, partially sulfonated O-PBI and a derivative thereof), operates with a similarly high conductivity and exhibits an effect of providing a long lifespan in a water electrolyzer.

According to the present disclosure, a polymer electrolyte membrane including the partially sulfonated O-PBI or the derivative thereof has unprecedented high conductivity in a KOH solution, and has a characteristic of not significantly swelling in the KOH solution, so unlike sulfonated para-PBI, it does not need to be crosslinked, and thus the membrane casting process is simple.

Specifically, when a crosslinking agent is added to the membrane casting solution, crosslinking occurs, but in this case, the reaction rate may be negligible on the lab scale during room temperature and solution processing time (10 to 30 minutes). However, in roll-to-roll production in the industry, generally a large amount of casting solution needs to be produced, and it may take several days to cast one batch of casting solution. Therefore, crosslinking by adding a chemical crosslinking agent such as dibromoxylene (DBX) is not an option at industrial scale.

In addition, for example, an imidazole unit crosslinked by a crosslinking agent such as DBX may become a starting point for alkaline decomposition, but according to the present disclosure, in case of an aromatic ether group in the backbone of sulfonated O-PBI, the sulfonated phenoxy ether may be stable to alkaline decomposition.

In one embodiment, the sulfonation degree of the poly[2,2'-(4,4'-oxybis(1,4-phenylene))-5,5'-bibenzimidazole] (O-PBI) or the derivative thereof may be 70% or less.

The content of the partially sulfonated O-PBI and the derivative thereof may vary according to the sulfonation degree of the partially sulfonated O-PBI and the derivative thereof. As the sulfonation degree increases, the solubility in water increases, thus, in order to control dimensional stability to a desired level, the content may be adjusted according to the sulfonation degree. The term "sulfonation degree" used in the present invention refers to the extent to which sulfonic acid groups are substituted among the total substituents to which the sulfonic acid group may be substituted in the partially sulfonated O-PBI and the derivative thereof. A sulfonation degree of 100% is equivalent to two sulfonic acid groups per repeating unit.

For example, the sulfonation degree of the partially sulfonated O-PBI and the derivative thereof may be 40 wt% or more, 45 wt% or more, 50 wt% or more, 55 wt% or more, 60 wt% or more, or 65 wt% or more, and may be 70 wt% or less, 65 wt% or less, 60 wt% or less, 55 wt% or less, 50 wt% or less, or 45 wt% or less.

In one embodiment, the partially sulfonated poly[2,2'-(4,4'-oxybis(1,4-phenylene))-5,5'-bibenzimidazole] (O-PBI) or the derivative thereof may be pre-swollen with a KOH solution. For example, during the pre-swelling process, the O-PBI may be doped with KOH.

In one embodiment, the poly[2,2'-(4,4'-oxybis(1,4-phenylene))-5,5'-bibenzimidazole] (O-PBI) or the derivative thereof may not include a quaternary ammonium group in a mother skeleton.

In order for the polymer electrolyte membrane of the present invention to transfer hydroxide ions, a specific functional group is required. In conventional technology, a quaternary ammonium group has been applied as an example of a specific functional group to enable the transfer of hydroxide ions. However, such a quaternary ammonium group has a problem of being decomposed through nucleophilic substitution or Hofmann elimination. Accordingly, the present inventors have repeatedly conducted research to develop a new electrolyte membrane having high performance and long-term stability, and as a result, completed a polymer electrolyte membrane having excellent stability by not including the quaternary ammonium group in the mother skeleton, thereby preventing attack on the mother skeleton and the resulting destruction.

In one embodiment, the molecular weight of the partially sulfonated O-PBI and the derivative thereof may be 20,000 to 150,000. When the molecular weight is equal to or greater than the lower limit, the solubility is excellent, and when it is equal to or less than the upper limit, the mechanical properties are excellent.

For example, the molecular weight may be 20,000 or more, 25,000 or more, 30,000 or more, 35,000 or more, 40,000 or more, 45,000 or more, 50,000 or more, and may be 150,000 or less, 120,000 or less, 110,000 or less, 100,000 or less, 90,000 or less, 80,000 or less, 70,000 or less, 60,000 or less, or 50,000 or less.

In one embodiment, the thickness of the polymer electrolyte membrane may be 10 to 500 μm.

For example, the thickness of the electrolyte membrane may be 10 μm or more, 20 μm or more, 30 μm or more, 40 μm or more, 50 μm or more, 60 μm or more, 70 μm or more, 80 μm or more, 90 μm or more, or 100 μm or more, and may be 500 μm or less, 400 μm or less, 300 μm or less, 200 μm or less, or 100 μm or less.

In one embodiment, the polymer electrolyte membrane may be at least one selected from the group consisting of a single membrane, a reinforced membrane, a composite membrane, and a reinforced composite membrane, and specifically, the single membrane refers to a membrane prepared using, as a main material, the partially sulfonated O-PBI and the derivative thereof according to one embodiment of the present invention, the reinforced membrane may be in a form in which the partially sulfonated O-PBI and the derivative thereof according to one embodiment of the present invention is impregnated with a porous membrane based on an organic or inorganic material having pores therein as a support to improve physical properties of the membrane, the composite membrane may be in a form including organic-based, inorganic-based, or organic-inorganic hybrid-based nanoparticles and additives, in which the partially sulfonated O-PBI and the derivative thereof according to one embodiment of the present invention is used as a main material, so as to reduce fuel and active material crossover or to enhance performance, and the reinforced composite membrane may be in a form applying both concepts of the composite membrane and the reinforced membrane described above.

In one embodiment, the polymer electrolyte membrane may be reinforced with a porous support.

In one embodiment, the polymer electrolyte membrane may be for use in at least one selected from the group consisting of water electrolysis, water electrolysis using a KOH electrolyte, fuel cells operating with a KOH supply solution, electrochemical pumps using a KOH electrolyte, and $CO_2$ electrolyzers using a KOH electrolyte.

For example, in the fuel cell operating with a KOH supply solution, the KOH supply solution may include, as a fuel, alcohols (e.g., methanol, ethanol, etc.), carbohydrates (e.g., glucose, fructose, saccharose, etc.), ammonia, hydrazine, or urea.

In one embodiment, the polymer electrolyte membrane may be for operation in a potassium hydroxide (KOH) solution of 0.1 to 7 M.

For example, the polymer electrolyte membrane may be for operation in a KOH solution of 0.1 M or more, 0.5 M or more, 1 M or more, 2 M or more, 3 M or more, 4 M or more, 5 M or more, or 6 M or more, and may be for operation in a KOH solution of 7 M or less, 6 M or less, 5 M or less, 4 M or less, 3 M or less, 2 M or less, 1 M or less, or 0.5 M or less.

## Water Electrolysis Device

In other exemplary embodiments of the present invention, a water electrolysis device including the polymer electrolyte membrane is provided.

## Method of preparing Polymer Electrolyte Membrane

In other exemplary embodiments of the present invention, a method of preparing a polymer electrolyte membrane is provided, the method comprising: synthesizing poly[2,2'-(4,4'-oxybis(1,4-phenylene))-5,5'-bibenzimidazole] (O-PBI) or a derivative thereof; partially sulfonating the poly[2,2'-(4,4'-oxybis(1,4-phenylene))-5,5'-bibenzimidazole] (O-PBI) or the derivative thereof; preparing a casting solution including the partially sulfonated poly[2,2'-(4,4'-oxybis(1,4-phenylene))-5,5'-bibenzimidazole] (O-PBI) or the derivative thereof; and preparing a membrane by coating the casting solution.

The synthesizing of the poly[2,2'-(4,4'-oxybis(1,4-phenylene))-5,5'-bibenzimidazole] (O-PBI) or the derivative thereof, and the partially sulfonating of the poly[2,2'-(4,4'-oxybis(1,4-phenylene))-5,5'-bibenzimidazole] (O-PBI) or the derivative thereof, is substituting and introducing sulfonic acid groups by reacting a sulfonating agent with a starting polymer.

For example, the starting polymer may be diaminobenzidine, 1,2-diamino-5-oxybenzene-1,2-diaminobenzene, or a derivative thereof. For example, the sulfonating agent may be sulfuric acid, sulfur trioxide, chlorosulfonic acid, sulfoisophthalic acid, acetyl sulfate, or a derivative thereof.

A sulfonated polymer may be prepared in two methods. First, 1) PBI may be sulfonated by reacting with a sulfonating agent. Alternatively, 2) a monomer may be sulfonated. For example, biphenyl-4,4'-dicarboxylic acid or 4,4'-oxybisbenzoic acid may be sulfonated. The method of 2) may provide better control over the sulfonation degree and the position of sulfonic acid groups than the method of 1).

In one embodiment, in the partially sulfonating, the starting polymer may be phenoxyphenyl-4,4-dicarboxylic acid monomer or a derivative thereof.

In one embodiment, the phenoxyphenyl-4,4-dicarboxylic acid monomer or the derivative thereof may include at least one selected from the group consisting of sulfonated terephthalic acid or a derivative thereof, 4,4'-biphenyldicarboxylic acid, 1,4-naphthalenedicarboxylic acid, 2,6-naphthalenedicarboxylic acid, 2-benzimidazole terephthalic acid, and 4,4'-diphenylsulfonedicarboxylic acid.

For example, the phenoxyphenyl-4,4-dicarboxylic acid monomer or the derivative thereof may be sulfonated before or after polymerization, and may form a copolymer with the above-described isophthalic acid, terephthalic acid, or the like.

In one embodiment, in the partially sulfonating of the poly[2,2'-(4,4'-oxybis(1,4-phenylene))-5,5'-bibenzimidazole] (O-PBI) or the derivative thereof, a non-sulfonated derivative may be used as a comonomer. In one embodiment, the partially sulfonating may be performed such that the sulfonation degree of the poly[2,2'-(4,4'-oxybis(1,4-phenylene))-5,5'-bibenzimidazole] (O-PBI) or the derivative thereof may be 70% or less.

In one embodiment, in addition to the preparing of the membrane, the method may further include: introducing the membrane into a potassium hydroxide (KOH) solution to perform pre-swelling.

In one embodiment, the concentration of the potassium hydroxide (KOH) solution may be 0.5 to 25 wt%.

For example, the concentration of the potassium hydroxide (KOH) solution may be 0.5 wt% or more, 1 wt% or more, 5 wt% or more, 10 wt% or more, 15 wt% or more, or 20 wt% or more, and may be 25 wt% or less, 20 wt% or less, 15 wt% or less, 10 wt% or less, 5 wt% or less, or 1 wt% or less.

In one embodiment, the pre-swelling may be performed at a temperature of 20 °C or more.

For example, the pre-swelling may be performed at 20 °C or more, 50 °C or more, 70 °C or more, 75 °C or more, 80 °C or more, or 85 °C or more, and may be performed at 90 °C or less, 85 °C or less, 80 °C or less, 75 °C or less, or 50 °C or less. For example, the pre-swelling may be performed at room temperature when a higher concentration of KOH is used.

Hereinafter, the present invention will be described in detail with reference to preferred embodiments so that those of ordinary skill in the art to which the present invention pertains may readily carry out the present invention. However, the present invention may be implemented in various different ways and is not limited to the embodiments described herein.

**Example**

**<Preparation Example 1> Preparation of Partially Sulfonated Poly[2,2'-(4,4'-oxybis(1,4-phenylene))-5,5'-bibenzimidazole] (O-PBI) Copolymer**

**1) Synthesis of sodium 6,6'-oxybis(3-carboxybenzenesulfonate) (SODBA)**

The synthesis follows the procedure reported by Holdcroft et al. (Kulkarni, M. P., Peckham, T. J., Thomas, O. D. & Holdcroft, S. Synthesis of higher sulfonated polybenzimidazoles by direct copolymerization and grafting. J Polym Sci A Polym Chem 51, 3654-3666 (2013).) 15 g of 4,4'-oxybisbenzoic acid (phenoxyphenyl-4,4-dicarboxylic acid) was placed in a 100 mL round-bottom flask equipped with an argon inlet, and 45 mL of 20% fuming sulfuric acid was added. Then, the mixture was stirred at 110 °C for 2 hours to obtain a brown viscous solution. The solution was cooled to room temperature and poured into 100 g of crushed ice. After all the ice had melted, 30 g of NaCl was added, and a white precipitate was formed. The precipitate was collected by filtration and purified by recrystallizing twice in DI water. The purified crystals were vacuum-dried at 110 °C for 24 hours. The yield was 73%. $^1$H NMR(Bruker UltraShield 400 Hz, DMSO-d6): $\delta$(ppm) = 8.41(2H), 7.91(2H), 6.84(2H).

**2) Synthesis of SOPBI copolymer**

As an example, the synthesis of 50SOPBI is presented. 4.634 g (21.630 mmol) of DAB was placed in a 500 mL flask equipped with an inert gas inlet and an overhead stirrer, and 213.5 g of PPA was added. The mixture was heated at 110 °C for 2 hours until all the DAB was dissolved. Then, 5 g (10.815 mmol) of SODBA was added. The mixture was stirred vigorously for 30 minutes, and then stirred slowly at 140 °C for 2 hours. Then, 2.792 g (10.815 mmol) of OBA was added. After stirring vigorously for 30 minutes, the temperature was raised and maintained at 160 °C for 16 hours. The resulting brown viscous solution was diluted with 10 mL of phosphoric acid and slowly poured into DI water to form brown polymer fibers. The fibers were immersed in 2 L of 0.5 M $K_2CO_3$ solution for 24 hours for neutralization and repeatedly washed with DI water to remove excess $K_2CO_3$. Next, the fibers were soaked in acetone for 2 hours to exchange water, and dried in a vacuum oven at 100 °C for 24 hours. For other copolymers, the ratio of OBA and SODBA was changed and the amount of PPA was adjusted such that OBA and SODBA together accounted for 5.5 wt% based on the total monomer content.

**3) Synthesis of sulfonated di-p-tolyl sulfone**

The synthesis was conducted by modifying the procedure reported by Yan et al. (Shengbo Qing, Wei Huang, Deyue Yan.) Through the synthesis and characterization of thermally stable sulfonated polybenzimidazole, 3,3'-disulfonyl-4,4'-dicarboxydiphenylsulfonate was obtained. (Journal of Polymer Science Part A: Polymer Chemistry, vol 43, 4363-4372 (2005).)

10 g of 4,4'-dimethyldiphenyl sulfone was placed in a 100 mL round-bottom flask equipped with an argon inlet, and 40 mL of 20% fuming sulfuric acid was added. Then, the mixture was stirred at 110 °C for 4 hours to form a brown viscous solution. The solution was cooled to room temperature and poured into 80 g of crushed ice. After all the ice had melted, 15 g of NaCl was added, and a white precipitate was formed. The precipitate was collected by filtration and recrystallized twice in DI water. The purified crystals were vacuum-dried at 110 °C for 24 hours. The yield was 82% based on mole. $^1$H NMR(Bruker UltraShield 400 Hz, DMSO-d6): $\delta$(ppm) = 8.21(2H), 7.76(2H), 7.43(2H).

### 4) Synthesis of 3,3'-disulfonyl-4,4'-dicarboxydiphenylsulfone

3,3'-disulfonyl-4,4'-dicarboxydiphenylsulfone was synthesized by oxidizing sulfonated di-p-tolyl sulfone in permanganate under alkaline conditions at 100 °C for 15 hours, thereby producing a brown solution. After cooling the solution to room temperature, the dark brown precipitate was filtered, and the clear solution was acidified with HCl until pH 3 was reached. The white needle-shaped crystals were purified by recrystallization, and the purified crystals were vacuum-dried at 110 °C for 24 hours.

### 5) Synthesis of SSPBI copolymer

As an example, the synthesis of 50SSPBI is presented. 4.193 g (19.958 mmol) of DAB was placed in a 500 mL flask equipped with an inert gas inlet and an overhead stirrer, and 186.4 g of PPA was added. The mixture was heated at 110 °C for 2 hours until all the DAB was dissolved. Then, 5 g (9.797 mmol) of SODBA was added. The mixture was stirred vigorously for 30 minutes, and then stirred slowly at 140 °C for 2 hours. Then, 1.656 g (9.797 mmol) of terephthalic acid was added. After stirring vigorously for 30 minutes, the temperature was raised and maintained at 160 °C for 16 hours. The resulting brown viscous solution was diluted with 10 mL of phosphoric acid and slowly poured into DI water to form brown polymer fibers. The fibers were immersed in 2 L of 0.5 M $K_2CO_3$ solution for 24 hours for neutralization and repeatedly washed with DI water to remove excess $K_2CO_3$. Next, the fibers were soaked in acetone for 2 hours to exchange water, and dried in a vacuum oven at 100 °C for 24 hours. For other copolymers, terephthalic acid was replaced with isophthalic acid or oxybisbenzoic acid monomer, and the amount of PPA was adjusted so that the isophthalic acid or oxybisbenzoic acid monomer accounted for 5.5 wt% based on the total monomer content.

### <Preparation Example 2> Preparation of SOPBI electrolyte membrane doped with potassium hydroxide (KOH)

### 1) Fabrication of membrane

3.5 wt% of LiCl based on the polymer weight was dissolved in DMSO, and 8.5 wt% of SOPBI based on DMSO was added. The mixture was stirred at 70 °C for 24 hours. Undissolved particles were removed by centrifugation. Then, the polymer solution was subjected to ultrasonic treatment to remove bubbles and stored at 30 °C. To fabricate the membrane, the solution was cast on a glass plate using a doctor blade. The wet film was stored in an oven at 80 °C under atmospheric pressure for 2 hours, and then under vacuum for 24 hours. After cooling to room temperature, the dried membrane was peeled off from the glass plate and stored in a zipper bag.

### 2) Activation of 50SOPBI membrane

To improve the conductivity of 50SOPBI, a 15 wt% KOH solution was filled in a Teflon container, the 50SOPBI membrane was added, and the container was then closed and stored at 80 °C for 48 hours. After cooling again to room temperature, the surface of the membrane was wiped with a tissue to remove excess solution, and the membrane was soaked again in a solution having the final target KOH concentration for at least 24 hours, and then stored until use.

### 3) 50SOPBI reinforced with PPS

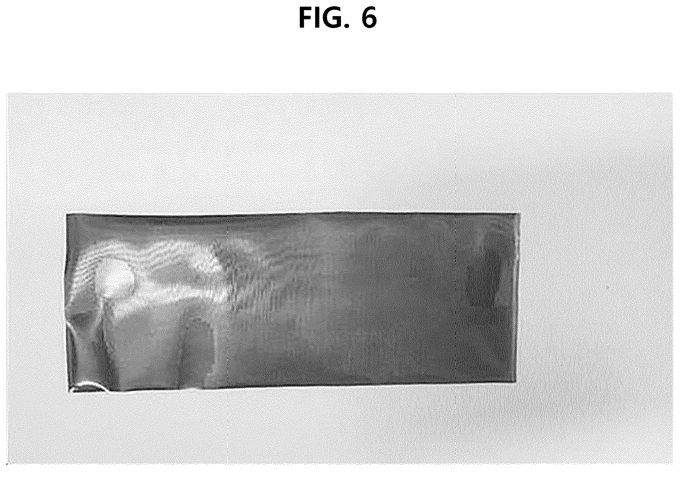

To impart mechanical stability to the membrane, a poly(phenylenesulfone) (PPS) reinforcing material was added as a membrane support. To prepare the reinforced membrane, the solution was cast on the PPS fabric on a glass plate using a doctor blade. The wet film was stored in an oven at 80 °C under atmospheric pressure for 2 hours, and then under vacuum for 24 hours. After cooling to room temperature, the dried reinforced membrane was peeled off from the glass plate and stored in a zipper bag (see FIG. 6).

### Experimental Example

### <Evaluation Method>

### 1) Conductivity and Alkaline Stability

A KOH-doped membrane having a wet thickness ($t_{wet}$) was placed between two disk-shaped electrodes (gold or platinum) having an active area (A) of 1.767 cm$^2$. The gap between the electrodes and the membrane was filled with the KOH solution, and the through-plane ionic conductivity was measured using electrochemical impedance spectroscopy (EIS) in galvanostatic mode. The measurement was repeated for a stack of two and three membranes. The resistance (R) was represented as a function of the membrane thickness. The empty cell resistance ($R_{empty}$), which is the total system resistance, was extracted from the y-axis intercept. The conductivity of the membrane may be calculated according to the following Equations (1) and (2).

$$\sigma \ (conductivity, mS \ cm^{-1}) = \frac{t_{wet}}{ASR} \tag{1}$$

$$ASR \ (area \ specific \ resistance, \Omega \ cm^2) \ = \ (R - R_{empty}) \ \times \ A \tag{2}$$

The alkaline stability was characterized by measuring the conductivity of the membrane stored in a KOH solution at 80 °C for a long time at room temperature.

**2) Swelling Ratio**

The swelling behavior is characterized by measuring the dimensional changes in length (1) and thickness (t) between a pure dry membrane ($l_{initial}$ and $t_{initial}$) and a doped membrane ($l_{doped}$ and $t_{doped}$). The length swelling and thickness swelling ratios were calculated according to the following Equations (3) and (4).

$$Length \ swelling \ (\%) \ = \ 100 \ \times \ \frac{l_{doped} - l_{intial}}{l_{intial}} \tag{3}$$

$$Thickness \ swelling \ (\%) \ = \ 100 \ \times \ \frac{t_{doped} - t_{intial}}{t_{intial}} \tag{4}$$

**3) Water and KOH Uptake**

A pure dry membrane was doped in a KOH solution. After a predetermined time, the wet membrane was quickly wiped with a tissue, and the wet weight ($w_{wet}$) was recorded. After evaporating the water overnight at 100 °C, $w_{dry}$ was recorded. Next, the membrane sample was washed with DI water until the pH became neutral, and then dried overnight at 100 °C ($w_{final}$). The total uptake, , KOH uptake, and polymer fraction were calculated according to the following Equations (5), (6), and (7).

$$Total \ uptake \ (\%) \ = \ 100 \ \times \ \frac{w_{wet} - w_{final}}{w_{final}} \tag{5}$$

$$KOH \ uptake \ (\%) \ = \ 100 \ \times \ \frac{w_{dry} - w_{final}}{w_{final}} \tag{6}$$

$$Water\ uptake\ (\%) = 100 \times \frac{w_{wet} - w_{dry}}{w_{final}}$$

(7)

**<Experimental Example 1> Evaluation of Conductivity of Polymer Electrolyte Membrane According to the Concentration of KOH Solution**

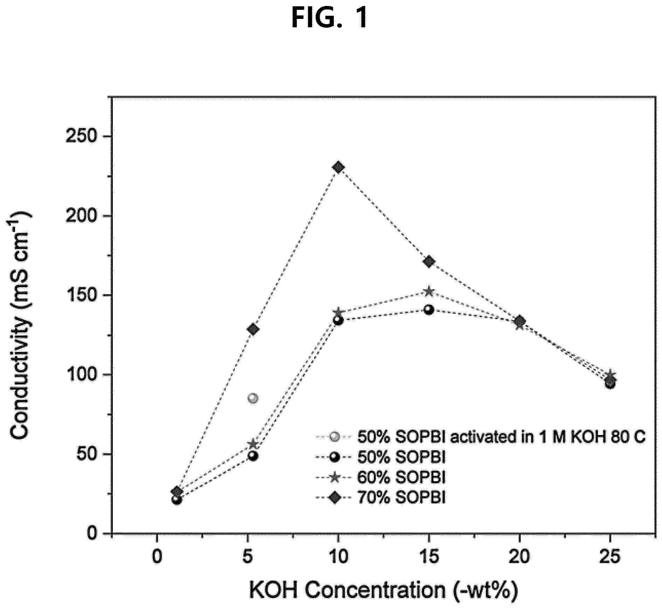

FIG. 1 is a graph illustrating conductivity (mS/cm) according to the concentration of a KOH solution of a polymer electrolyte membrane according to one embodiment of the present invention. At room temperature (approximately 23 to 25 °C), the conductivities of sulfonation degrees of 50, 60, and 70% of SOPBI (sulfonated O-PBI) were confirmed in various concentrations of KOH.

It was confirmed that the SOPBI with sulfonation degrees of 50% and 60% exhibited maximum conductivity at 15 wt% KOH, and the SOPBI with sulfonation degree of 70% exhibited maximum conductivity at 10 wt% KOH. At 1 M KOH (5.3 wt% KOH), the conductivities of the SOPBI with sulfonation degrees of 50%, 60%, and 70% were confirmed to be 49, 56, and 128 mS/cm, respectively. The SOPBI with sulfonation degree of 50%, which was activated at 80 °C in 1 M KOH, exhibited a result in which the conductivity was improved from 49 mS/cm to 85 mS/cm.

**<Experimental Example 2> Evaluation of Swelling of Polymer Electrolyte Membrane According to Concentration of KOH Solution**

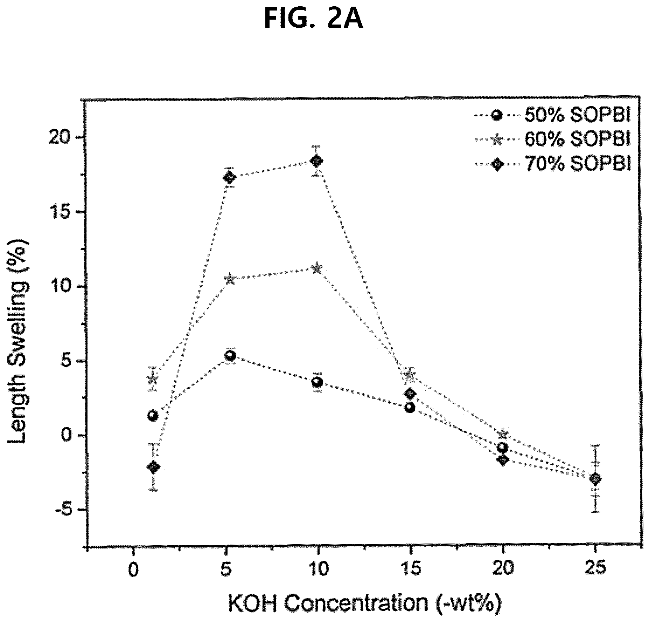

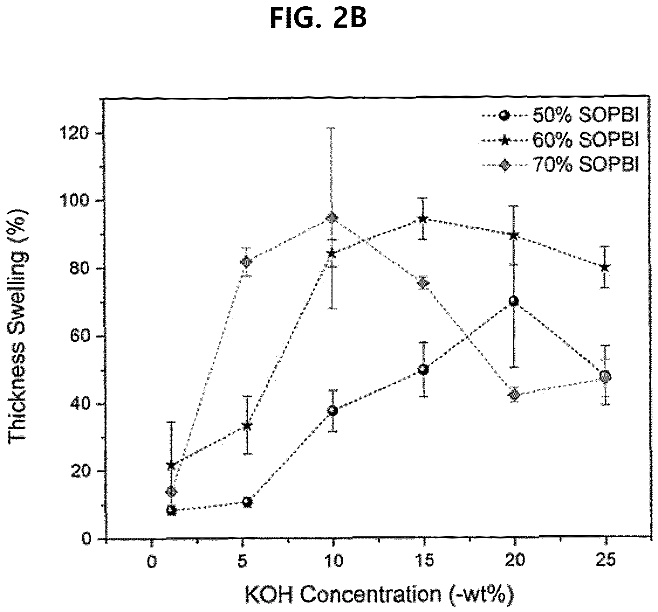

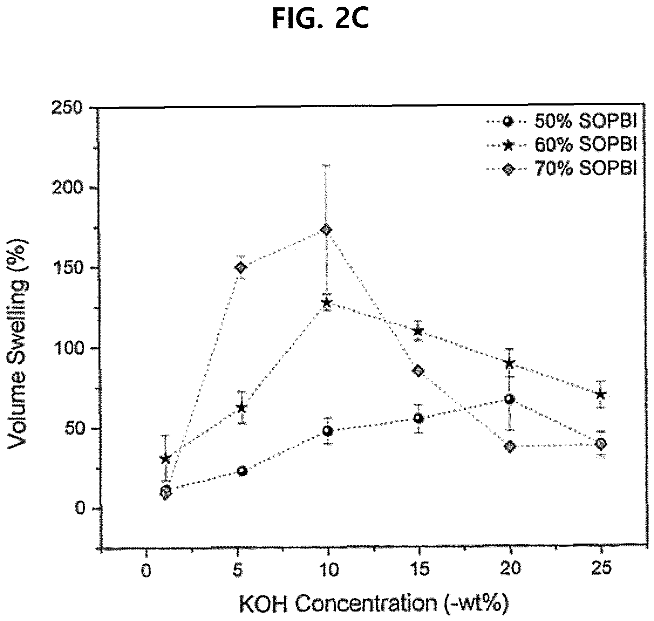

FIGS. 2A to 2C are graphs illustrating (FIG. 2A) length swelling, (FIG. 2B) thickness swelling, and (FIG. 2C) volume swelling according to the concentration of a KOH solution of a polymer electrolyte membrane according to one embodiment of the present invention.

The volume swelling of the SOPBI with sulfonation degree of 70% is significantly higher than those of the SOPBI with sulfonation degrees of 50% and 60% at low KOH concentrations (1.1 to 10 wt%). The volume swelling of the SOPBI with sulfonation degree of 70% decreases significantly as the KOH content increases. The SOPBI with sulfonation degree of 50% exhibits maximum thickness swelling at 20 wt% KOH. The SOPBI with sulfonation degree of 60% exhibits maximum thickness swelling at 15 wt% KOH. The SOPBI with sulfonation degree of 70% exhibits maximum thickness swelling at 10 wt% KOH.

**<Experimental Example 3> Evaluation of Conductivity of Polymer Electrolyte Membrane According to Pre-swelling Concentration**

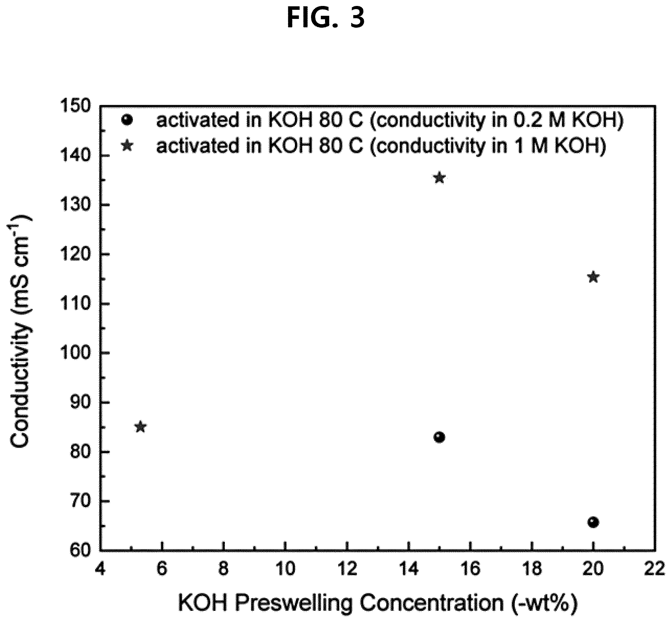

FIG. 3 is a graph evaluating conductivity according to pre-swelling concentration of a polymer electrolyte membrane according to one embodiment of the present invention. To increase conductivity, the SOPBI with sulfonation degrees of 50, 60, and 70% was pre-swollen in a higher concentration of KOH at 80 °C. In case of the SOPBI with sulfonation degrees of 50% and 60%, since the highest conductivity was observed at 15 and 20 wt% KOH, pre-swelling was performed in 5.3, 15, and 20 wt% KOH.

After being activated at 80 °C, the SOPBI with sulfonation degrees of 50% and 60% was sufficiently stable to maintain a membrane form, the SOPBI with sulfonation degree of 50% exhibited slight yellowing in the solution, and the SOPBI with sulfonation degree of 60% was more pronounced. In contrast, the SOPBI with sulfonation degree of 70% was partially dissolved and torn even in 1 M KOH at 80 °C.

Therefore, the SOPBI with sulfonation degree of 50% was selected as the base material. After pre-swelling in 15 wt% KOH at 80 °C, the SOPBI with sulfonation degree of 50% showed an improvement in conductivity from 49 mS/cm to 135 mS/cm in 1 M KOH. In addition, the conductivity in 0.2 M KOH improved from 21 mS/cm to 83 mS/cm.

**<Experimental Example 4> Evaluation of Conductivity of Polymer Electrolyte Membrane According to Operating Temperature**

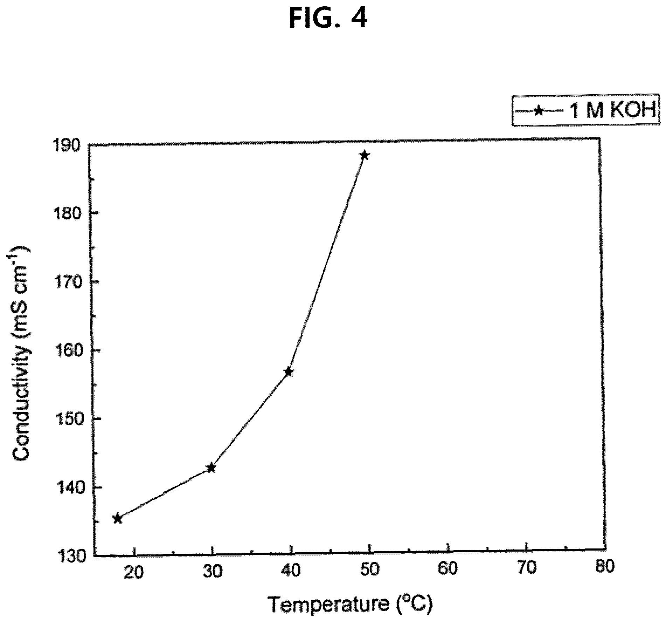

FIG. 4 is a graph evaluating conductivity according to operating temperature of a polymer electrolyte membrane according to one embodiment of the present invention. After pre-swelling the SOPBI with sulfonation degree of 50% at 80 °C, the conductivity was measured while increasing the temperature in 1 M KOH. It was confirmed that the conductivity of the SOPBI with sulfonation degree of 50% increased as the temperature increased in 1 M KOH.

**<Experimental Example 5> Comparative Evaluation of Conductivity of Polymer Electrolyte Membrane**

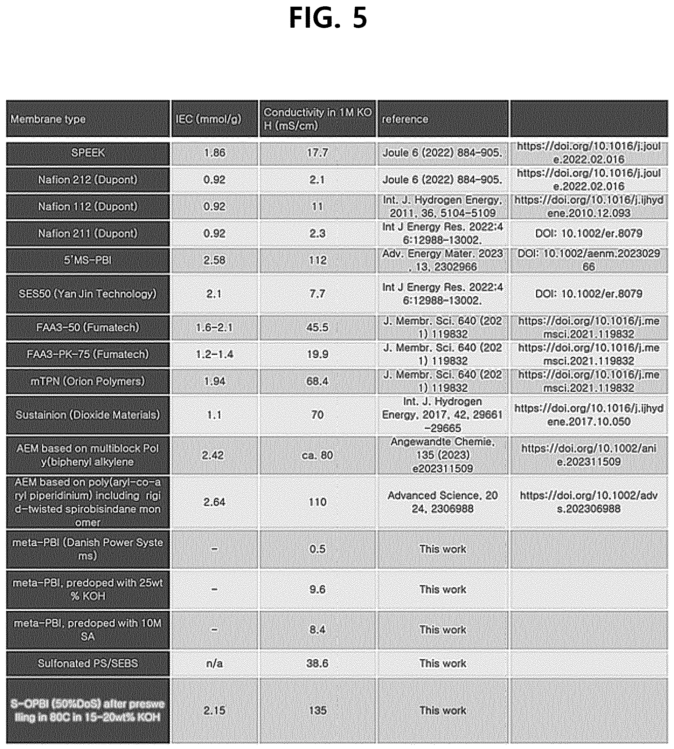

FIG. 5 is a result of evaluating the conductivity of the polymer electrolyte membrane (data from FIG. 3) according to one embodiment of the present invention and commercially available membranes (data from the relevant literature).

The 50% sulfonated O-PBI membrane, which was pre-swollen in 15 to 20 wt% KOH at 80 °C, has a lower IEC than 5'MS-PBI obtained in previous studies. In addition, it exhibited the highest conductivity among the alkaline conductive high-density membranes at room temperature, according to the literature.

**Claims**

1. A polymer electrolyte membrane comprising partially sulfonated poly[2,2'-(4,4'-oxybis(1,4-phenylene))-5,5'-bibenzimidazole] (O-PBI) or a derivative thereof, wherein the poly[2,2'-(4,4'-oxybis(1,4-phenylene))-5,5'-bibenzimidazole] (O-PBI) or the derivative thereof is non-crosslinked, and
wherein the partially sulfonated poly[2,2'-(4,4'-oxybis(1,4-phenylene))-5,5'-bibenzimidazole] (O-PBI) or the derivative thereof is doped with potassium hydroxide (KOH).

2. The polymer electrolyte membrane according to claim 1, wherein a sulfonation degree of the partially sulfonated poly [2,2'-(4,4'-oxybis(1,4-phenylene))-5,5'-bibenzimidazole] (O-PBI) or the derivative thereof is 70% or less;

   wherein the partially sulfonated poly[2,2'-(4,4'-oxybis(1,4-phenylene))-5,5'-bibenzimidazole] (O-PBI) or the derivative thereof is pre-swollen with a KOH solution;
   wherein the poly[2,2'-(4,4'-oxybis(1,4-phenylene))-5,5'-bibenzimidazole] (O-PBI) or the derivative thereof does not include a quaternary ammonium group in a mother skeleton; or
   wherein a molecular weight of the poly[2,2'-(4,4'-oxybis(1,4-phenylene))-5,5'-bibenzimidazole] (O-PBI) or the derivative thereof is 20,000 to 150,000.

3. The polymer electrolyte membrane according to claims 1 or 2, wherein a thickness of the polymer electrolyte membrane is 10 to 500 $\mu$m.

4. The polymer electrolyte membrane according to any one of claims 1-3,
wherein the polymer electrolyte membrane is reinforced with a porous support.

5. The polymer electrolyte membrane according to any one of claims 1-4,
wherein the polymer electrolyte membrane is for use in at least one selected from the group consisting of water electrolysis, water electrolysis using a KOH electrolyte, fuel cells operating with a KOH supply solution, electrochemical pumps using a KOH electrolyte, and $CO_2$ electrolyzers using a KOH electrolyte.

6. The polymer electrolyte membrane according to any one of claims 1-5,
wherein the polymer electrolyte membrane is for operation in a potassium hydroxide (KOH) solution of 0.1 to 7 M.

7. A water electrolysis device comprising the polymer electrolyte membrane according to any one of claims 1-6.

8. A method of preparing the polymer electrolyte membrane according to any one of claims 1-6, the method comprising:

   synthesizing poly[2,2'-(4,4'-oxybis(1,4-phenylene))-5,5'-bibenzimidazole] (O-PBI) or a derivative thereof;
   partially sulfonating the poly[2,2'-(4,4'-oxybis(1,4-phenylene))-5,5'-bibenzimidazole] (O-PBI) or the derivative thereof;
   preparing a casting solution including the partially sulfonated poly[2,2'-(4,4'-oxybis(1,4-phenylene))-5,5'-bibenzimidazole] (O-PBI) or the derivative thereof; and
   preparing a membrane by coating the casting solution.

9. The method according to claim 8, wherein, in the partially sulfonating, the partially sulfonating is performed such that a sulfonation degree of poly[2,2'-(4,4'-oxybis(1,4-phenylene))-5,5'-bibenzimidazole] (O-PBI) or the derivative thereof is 70% or less; or
wherein, in the partially sulfonating of the poly[2,2'-(4,4'-oxybis(1,4-phenylene))-5,5'-bibenzimidazole] (O-PBI) or the derivative thereof, a non-sulfonated derivative is used as a comonomer.

10. The method according to claims 8 or 9, further comprising:
introducing the membrane into a potassium hydroxide (KOH) solution to perform pre-swelling, in addition to the preparing of the membrane.

11. The method according to claim 10, wherein a concentration of the potassium hydroxide (KOH) solution is 0.5 to 25 wt%.

12. The method according to any one of claims 8-11, wherein the pre-swelling is performed at a temperature of 20 °C or higher.

13. The method according to any one of claims 8-12, wherein, in the partially sulfonating, a starting polymer is a phenoxyphenyl-4,4-dicarboxylic acid monomer or a derivative thereof.

14. The method according to claim 13, wherein the phenoxyphenyl-4,4-dicarboxylic acid monomer or the derivative thereof comprises at least one selected from the group consisting of sulfonated terephthalic acid, 4,4'-biphenyldicarboxylic acid, 1,4-naphthalenedicarboxylic acid, 2,6-naphthalenedicarboxylic acid, 2-benzimidazole terephthalic acid, and 4,4'-diphenylsulfonedicarboxylic acid.

15. The method according to claim 13, wherein the phenoxyphenyl-4,4-dicarboxylic acid monomer or the derivative thereof forms a copolymer with isophthalic acid or terephthalic acid.

# FIG. 1

# FIG. 2A

# FIG. 2B

# FIG. 2C

# FIG. 3

# FIG. 4

# FIG. 5

| Membrane type | IEC (mmol/g) | Conductivity in 1M KOH (mS/cm) | reference | |
|---|---|---|---|---|
| SPEEK | 1.86 | 17.7 | Joule 6 (2022) 884-905. | https://doi.org/10.1016/j.joule.2022.02.016 |
| Nafion 212 (Dupont) | 0.92 | 2.1 | Joule 6 (2022) 884-905. | https://doi.org/10.1016/j.joule.2022.02.016 |
| Nafion 112 (Dupont) | 0.92 | 11 | Int. J. Hydrogen Energy, 2011, 36, 5104-5109 | https://doi.org/10.1016/j.ijhydene.2010.12.093 |
| Nafion 211 (Dupont) | 0.92 | 2.3 | Int J Energy Res. 2022:46:12988-13002. | DOI: 10.1002/er.8079 |
| 5'MS-PBI | 2.58 | 112 | Adv. Energy Mater. 2023, 13, 2302966 | DOI: 10.1002/aenm.2023029 66 |
| SES50 (Yan Jin Technology) | 2.1 | 7.7 | Int J Energy Res. 2022:46:12988-13002. | DOI: 10.1002/er.8079 |
| FAA3-50 (Fumatech) | 1.6-2.1 | 45.5 | J. Membr. Sci. 640 (2021) 119832 | https://doi.org/10.1016/j.memsci.2021.119832 |
| FAA3-PK-75 (Fumatech) | 1.2-1.4 | 19.9 | J. Membr. Sci. 640 (2021) 119832 | https://doi.org/10.1016/j.memsci.2021.119832 |
| mTPN (Orion Polymers) | 1.94 | 68.4 | J. Membr. Sci. 640 (2021) 119832 | https://doi.org/10.1016/j.memsci.2021.119832 |
| Sustainion (Dioxide Materials) | 1.1 | 70 | Int. J. Hydrogen Energy, 2017, 42, 29661-29665 | https://doi.org/10.1016/j.ijhydene.2017.10.050 |
| AEM based on multiblock Poly(biphenyl alkylene | 2.42 | ca. 80 | Angewandte Chemie, 135 (2023) e202311509 | https://doi.org/10.1002/anie.202311509 |
| AEM based on poly(aryl-co-aryl piperidinium) including rigid-twisted spirobisindane monomer | 2.64 | 110 | Advanced Science, 2024, 2306988 | https://doi.org/10.1002/advs.202306988 |
| meta-PBI (Danish Power Systems) | – | 0.5 | This work | |
| meta-PBI, predoped with 25wt% KOH | – | 9.6 | This work | |
| meta-PBI, predoped with 10M SA | – | 8.4 | This work | |
| Sulfonated PS/SEBS | n/a | 38.6 | This work | |
| S-OPBI (50%DoS) after preswelling in 80C in 15-20wt% KOH | 2.15 | 135 | This work | |

# FIG. 6

<table>
<tr><td colspan="2">Europäisches Patentamt<br>European Patent Office<br>Office européen des brevets</td><td>**EUROPEAN SEARCH REPORT**</td><td>**Application Number**<br><br>EP 25 19 8381</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | KR 2024 0009684 A (KOREA INST SCI & TECH [KR]) 23 January 2024 (2024-01-23)<br>* claims 1-14 *<br>* paragraph [0024] *<br>----- | 1-15 | INV.<br>H01M8/103<br>H01M8/1027<br>H01M8/1069<br>H01M8/1086<br>C25B1/04<br>C25B13/08 |
| A | MAITI TUSHAR KANTI ET AL: "Advances in polybenzimidazole based membranes for fuel cell applications that overcome Nafion membranes constraints",<br>POLYMER, ELSEVIER, AMSTERDAM, NL,<br>vol. 255, 13 July 2022 (2022-07-13),<br>XP087141205,<br>ISSN: 0032-3861, DOI:<br>10.1016/J.POLYMER.2022.125151<br>[retrieved on 2022-07-13]<br>* page 18, column 2, lines 7-25 *<br>----- | 1-15 | |
| A | US 2020/087473 A1 (MURDOCK LAURA A [US] ET AL) 19 March 2020 (2020-03-19)<br>* claims 1-17 *<br>----- | 1-15 | |
| A | EP 4 012 072 A1 (KOREA INST SCI & TECH [KR]) 15 June 2022 (2022-06-15)<br>* claims 1-14 *<br>----- | 1-15 | TECHNICAL FIELDS SEARCHED (IPC)<br><br>H01M<br>C25B |

The present search report has been drawn up for all claims

| Place of search | Date of completion of the search | Examiner |
|---|---|---|
| The Hague | 9 January 2026 | Reich, Claus |

EPO FORM 1503 03.82 (P04C01)

## ANNEX TO THE EUROPEAN SEARCH REPORT
## ON EUROPEAN PATENT APPLICATION NO.

EP 25 19 8381

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2026

| Patent document cited in search report | | Publication date | Patent family member(s) | | Publication date |
|---|---|---|---|---|---|
| KR 20240009684 | A | 23-01-2024 | NONE | | |
| US 2020087473 | A1 | 19-03-2020 | CN | 112823182 A | 18-05-2021 |
| | | | EP | 3850035 A1 | 21-07-2021 |
| | | | JP | 7533963 B2 | 14-08-2024 |
| | | | JP | 2022501463 A | 06-01-2022 |
| | | | JP | 2024164016 A | 26-11-2024 |
| | | | KR | 20210064265 A | 02-06-2021 |
| | | | US | 2020087473 A1 | 19-03-2020 |
| | | | US | 2022064391 A1 | 03-03-2022 |
| | | | US | 2024182656 A1 | 06-06-2024 |
| | | | WO | 2020060857 A1 | 26-03-2020 |
| EP 4012072 | A1 | 15-06-2022 | EP | 4012072 A1 | 15-06-2022 |
| | | | KR | 20220082160 A | 17-06-2022 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240123152

- KR 1020240009684

**Non-patent literature cited in the description**

- **KULKARNI, M. P.** ; **PECKHAM, T. J.** ; **THOMAS, O. D.** ; **HOLDCROFT, S.** Synthesis of higher sulfonated polybenzimidazoles by direct copolymerization and grafting. *J Polym Sci A Polym Chem*, 2013, vol. 51, 3654-3666

- **SHENGBO QING** ; **WEI HUANG** ; **DEYUE YAN**. Through the synthesis and characterization of thermally stable sulfonated polybenzimidazole, 3,3'-disulfonyl-4,4'-dicarboxydiphenylsulfonate was obtained. *Journal of Polymer Science Part A: Polymer Chemistry*, 2005, vol. 43, 4363-4372